# EUROPEAN PATENT SPECIFICATION

(11) **EP 0 374 564 B1**
(45) Date of publication and mention of the grant of the patent: **14.04.1993**
(21) Application number: 89122323.2
(22) Date of filing: 04.12.1989
(51) Int. Cl.: C01C 1/04, B01J 8/04

(54) **Improvements to reactors for heterogeneous synthesis**
Reaktoren für heterogene Synthesen
Réacteurs pour synthèses hétérogènes

(30) Priority: 21.12.1988 CH 4739/88
(43) Date of publication of application: 27.06.1990
(73) Proprietor: AMMONIA CASALE S.A., CH-6900 Lugano-Besso (CH); Zardi, Umberto, CH-6932 Breganzona (Ti) (CH)
(72) Inventor: Zardi, Umberto, CH-6932 Breganzona (CH); Pagani, Giorgio, CH-6900 Lugano (CH)
(74) Representative: Bottero, Claudio

(56) References cited:
- EP-A- 0 202 454
- EP-A- 0 272 448
- EP-A- 0 297 474
- FR-A- 2 343 699
- Nitrogen, vol 165, jan/febr. 1987 p. 27-31; "Revamping of ammonia converters".

## Description

The invention relates to a process to improve yields and reduce energy consumption in existing reactors for heterogeneous synthesis, and more particularly for the synthesis of ammonia, consisting of several catalytic beds through which synthesis gas flows axially, and cooled by feeding quench gas between beds.

The invention also includes reactors so obtained.

It is known that one of the most common reactors currently used in ammonia synthesis plants is the type with four catalytic beds through which the synthesis gas flows axially, with intermediate quenching (Kellogg).

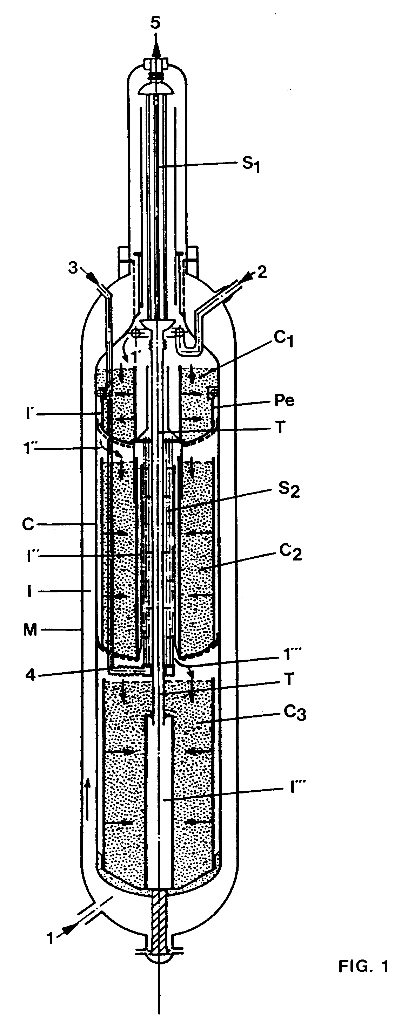

Numerous systems have been put forward, described and adopted in order to improve yields in the above-mentioned Kellogg reactors. More particularly, according to a description in "Nitrogen", Nr. 165, January/February 1987, Topsoe convert the Kellogg 4-bed reactor into a 2-bed reactor (by joining the 1st and 2nd bed and the 3rd and 4th bed of the original reactor), with intermediate cooling between beds by means of a heat exchanger (Fig. 1 in the article quoted). The gas flows radially.

According to the same article, Kellogg themselves convert the reactor using the space in the 1st bed, introducing heat exchangers. The second bed in the existing reactor becomes therefore the 1st bed in the new layout according to which the 3rd and 4th bed in the existing reactor are intended to operate in parallel (according to the so-called split-flow system), and a reactor is therefore obtained in which there are two reaction stages with intermediate cooling by exchanger (Fig. 8 of the above-mentioned article). The gas flow remains axial as in the original reactor. Still in the above-mentioned article in "Nitrogen", it is stated that the applicants intend to maintain the same number of beds as in the original Kellogg reactor (4 beds) and the same quenching system between beds.

The gas flow is changed from axial to axial-radial (Fig. 4 in the article).

Ammonia Casale has been the first to describe a system for the conversion in situ of Kellogg reactors thus improving performance and reducing consumption. In effect in its USA Patent No. 4755362 (corresponding to EP-A-0 202 454) the Applicants show in Fig. 1A, as state of the Art, exactly the above classic Kellogg reactor with four axial beds and four intermediate quenches.

In this pioneering Patent No. US 4755362 the Applicants have maintained the same number of beds as at the start even in substantially radial reactors obtained by conversion in situ.

In Swiss Patent Application No. 02529/87 (corresponding to EP-A-0 297 474) the Applicants have suggested (Fig. 1) a further application of their system for modernizing a 4-bed Kellogg reactor converting it into a 3-bed reactor with quenching between the 1st and 2nd bed and cooling by means of an exchanger between the 2nd and 3rd bed. As the above-mentioned Figure shows, the 2nd bed in this layout is obtained by joining the 2nd and 3rd bed in the original reactor into a new 3-bed layout with quenching between the first and the second bed and an exchanger between the 2nd and 3rd bed. As Fig. 1 in said Swiss Patent Application shows, such Figure still being shown in this Patent Application, the 2nd (C2) and the 3rd (C3) bed were made into one with the interchanger being installed coaxially.

This solution, although offering considerable advantages when compared to the quench system, can however give rise to a less than optimal distribution of the catalyst, in the sense that the volume of catalyst installed in the second bed could result excessive.

The purpose of this invention is to supply a process and a new layout for the modified reactor which avoid the above disadvantages.

Continuing in their research the Applicants have now found surprisingly that considerable improvements can be obtained by adopting the layout described in Fig. 1 of Swiss Patent Application No. 02529/87 (corresponding to EP-A-0 297 474), but more especially by creating the three beds by joining the 3rd and 4th bed in the original Kellogg 4-bed reactor layout.

The gas flow is generally changed from the original axial flow into a radial or axial-radial flow in at least part of the beds.

More particularly, and as described in the above-mentioned previous Swiss Patent Application, the axial flow could be maintained in the 1st bed.

According to the present invention, the process to convert in situ existing reactors for the synthesis of ammonia with four catalytic beds with axial flow (Kellogg) is now characterized in that:
- the first two upper beds are converted in situ so that the gas runs through them with a radial or axial-radial flow;
- the two remaining lower beds are combined into a single bed through which the gas flow is either radial or axial-radial;
- quenching takes place between said two upper beds, through which an exchanger is inserted to cool the gas between said second bed and third combined bed.

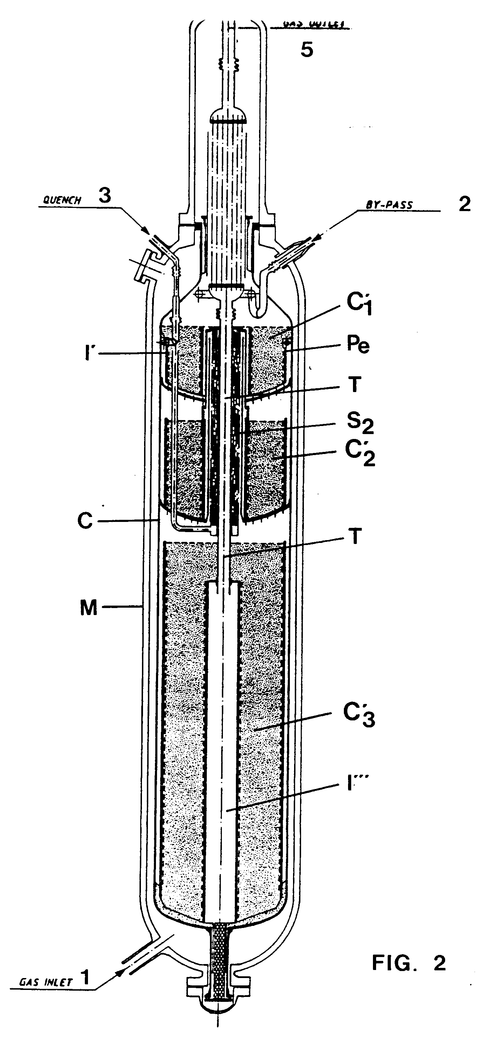

The various aspects and advantages of the invention will become more apparent from the description of the embodiment shown in Figure 2A.

Numerical references indicate the same elements as those in Figure 1 of said Swiss Patent Application No. 02529/87 (corresponding to EP-A-0 297 474).

Characteristically it can now be seen (Fig. 2) that of the three beds C1, C2 and C3, the last one is obtained by combining together the 3rd and 4th bed, i.e. the last but one and the last bed in the original layout of the Kellogg axial reactor (shown by way of example in Fig. 1A of US Patent No. 4755362). In this new embodiment the layout is still the "3 beds, 1 quenching, 1 interchanger" arrangement, but with the following important differences:
- the interchanger (S2), still in a central position, is inserted coaxially with the 1st and 2nd bed (C1, C2) and is fed, shell-side, by the partly reacted gas leaving the 2nd bed and tube-side by the fresh gas;
- the dimensions of the 1st and 2nd bed may remain the same as the original ones, while the original 3rd and 4th bed are combined together (C3).

In this way the volume of catalyst will be greatest in the new third lower bed (C3), and smallest in the first bed; this distribution results, not unsurprisingly, in a considerable improvement in reactor performance. In addition, it is conveniently carried out in situ.

## Claims

1. Process to convert in situ existing reactors for the synthesis of ammonia with four catalytic beds with an axial flow (Kellogg), characterized in that:
- the first two upper beds are converted in situ so that the gas runs through them with a radial or axial-radial flow;
- the two remaining lower beds are combined into a single bed through which the gas flow is either radial or axial-radial;
- quenching takes place between said two upper beds, through which an exchanger is inserted to cool the gas between said second bed and third combined bed.

## Patentansprüche

1. Verfahren zum Umgestalten bestehender Reaktoren für die Synthese von Ammoniak mit vier katalytischen Betten mit einem Axialstrom (Kellogg) in situ, dadurch gekennzeichnet, daß
- die ersten beiden oberen Betten in situ so umgestaltet werden, daß das Gas durch sie mit einem Radial- oder Axial-Radialstrom hindurchgeht,
- die beiden verbleibenden unteren Betten zu einem einzigen Bett kombiniert werden, durch welches das Gas entweder radial oder axial-radial strömt,
- das Abkühlen zwischen den zwei oberen Betten erfolgt, wobei ein Wärmeaustauscher eingesetzt ist, um das Gas zwischen dem zweiten Bett und dem dritten kombinierten Bett zu kühlen.

## Revendications

1. Procédé de conversion in situ de réacteurs existants pour la synthèse d'ammoniac comprenant quatre lits catalytiques et un écoulement selon la direction axiale (Kellogg) caractérisé en ce que:
- les deux premiers lits supérieurs sont convertis in situ de sorte que le gaz circule au travers d'eux selon un sens de circulation radial ou axial-radial:
- les deux lits inférieurs restants sont combinés pour former un seul lit au travers duquel le gaz circule selon un sens de circulation radial ou axial-radial;
- la trempe se produit entre les deux lits supérieurs entre lesquels un échangeur est inséré pour refroidir le gaz entre ledit deuxième lit et ledit troisième lit combiné.
